# FASCICULE DE BREVET EUROPEEN

(11) **EP 2 047 228 B1**
(45) Date de publication et mention de la délivrance du brevet: **21.07.2010**
(21) Numéro de dépôt: 07858409.1
(22) Date de dépôt: 09.10.2007
(51) Int. Cl.: G01N 1/16, G01N 1/20

(54) **DISPOSITIF POUR LE PRELEVEMENT D'ECHANTILLONS EN SURFACE DANS UN COURS D'EAU EN PERIODE DE CRUE**
VORRICHTUNG ZUR ENTHAHME VON OBERFLÄCHENPROBEN AUS EINEM FLUSSLAUF IN EINER HOCHWASSER ZEIT
DEVICE FOR WITHDRAWING SURFACE SAMPLES FROM A RIVER IN A FLOOD PERIOD

(30) Priorité: 09.10.2006 FR 0608841
(43) Date de publication de la demande: 15.04.2009
(73) Titulaire: Institut de Recherche pour le Développement ( IRD), 75480 Paris Cedex 10 (FR)
(72) Inventeur: SILVERA, Norbert, 10903 Bangkok (TH); RIBOLZI, Olivier, Vientiane (LA)
(74) Mandataire: Grosset-Fournier, Chantal Catherine
(86) Numéro de dépôt international: PCT/FR2007/001640
(87) Numéro de publication internationale: WO 2008/043908

(56) Documents cités:
- EP-A- 0 023 110
- WO-A-93/04355
- JP-A- 61 283 823
- US-A- 3 412 612
- US-A- 5 783 758
- US-A- 5 942 440
- US-A1- 2004 123 681
- US-A1- 2005 223 792

## Description

La présente invention est relative à un dispositif permettant de collecter des échantillons d'eau à la surface d'un ruisseau ou d'un cours d'eau analogue, notamment en période de crue où le niveau de l'eau peut varier de manière notable dans un laps de temps éventuellement très court.

Les documents US2005/0223792, EP0023110, US5942440 ou US20040123681 proposent des dispositifs avec des tubes d'échantillonnages dans une masse d'eau, mais ne sont pas adaptés à collecter de échantillons d'eau de surface et d'enregistrer l'instant et la hauteur de la collecte dans un cours d'eau en période de crue.

Pour un cours d'eau à débit moyen relativement faible, la dynamique de son évolution, notamment lorsqu'il s'écoule dans une région accidentée entre sa source et son déversement en aval dans une rivière ou autre, est particulièrement hétérogène en fonction des changements de pente, des rétrécissements de la section d'écoulement et surtout des apports d'eau latéraux qui engendrent des variations brutales du débit et de la concentration instantanée en matières en suspension.

Il est donc utile de pouvoir évaluer, notamment en un ou plusieurs points caractéristiques donnés, le comportement de ce cours d'eau par des prélèvements d'échantillons effectués dans des conditions exactement déterminées, permettant de mesurer l'évolution du niveau auquel se situe la surface de l'eau et la teneur dans celle-ci des matières entraînées, ceci d'une façon qui soit facile à mettre en oeuvre et le plus parfaitement reproductible dans le temps.

La présente invention concerne donc un dispositif permettant de collecter des échantillons d'eau de surface et d'enregistrer l'instant et la hauteur de la collecte dans un cours d'eau en période de crue, qui répond à ces impératifs, à l'aide d'un ensemble robuste et peu coûteux, simple à fabriquer et aisé à exploiter.

A cet effet, le dispositif porté par une ossature de support apte à être implantée dans le lit du cours d'eau à traiter, se caractérise en ce qu'il comporte d'une part un ensemble de tubes parallèles, à axes verticaux, régulièrement espacés et propres à collecter chacun un échantillon d'eau en surface, chaque tube présentant une hauteur différente d'un tube au suivant sur l'ossature; étant obturé à sa partie inférieure et comportant à sa partie supérieure des fentes d'admission de l'échantillon d'eau de surface dans le tube lorsque le niveau du cours d'eau atteint ces fentes, d'autre part des moyens électriques de détection du niveau d'eau lorsque le tube est rempli, et enfin un ensemble commun de contrôle, séparé de l'ossature, relié à l'ensemble des tubes pour mesurer séquentiellement l'instant de leur remplissage respectif au fur et à mesure de l'accroissement du niveau dans le cours d'eau.

Selon une caractéristique particulière, chaque tube est cylindrique, est obturé à sa partie inférieure par un premier capuchon de fermeture coiffant l'extrémité du tube, et est muni à sa partie supérieure d'un second capuchon comportant les fentes d'admission de l'eau dans le tube.

Dans un mode de réalisation préféré, le second capuchon, monté à l'extrémité supérieure de chaque tube, comporte quatre fentes, deux à deux opposées.

Selon une autre caractéristique, le second capuchon comporte un élément de tuyauterie qui traverse son fond supérieur pour mise à l'air à la pression atmosphérique de l'intérieur du tube afin de permettre son remplissage régulier par l'eau de surface à travers les fentes d'admission.

Selon encore une autre caractéristique, le second capuchon comporte extérieurement un élément de recouvrement tubulaire, élastique, propre à minimiser les échanges entre l'eau de surface extérieure dans le cours d'eau et l'échantillon prélevé dans le tube après remplissage de celui-ci à travers les fentes.

Avantageusement, un manchon cylindrique est également disposé autour de chaque tube entre ses deux capuchons pour permettre un positionnement toujours identique à lui-même de ces derniers sur le tube dans le but d'obtenir une parfaite reproductibilité des mesures effectuées sur ce tube, à chacun de ses remplissages successifs.

De préférence, le manchon cylindrique est agencé pour définir avec les fentes d'admission de l'eau dans le tube un trajet en chicane, propre à éviter un remplissage turbulent du tube.

De préférence également, le manchon cylindrique est réalisé en un matériau souple et est muni d'une encoche traversante inclinée sur l'axe du tube, apte à assurer son positionnement par glissement sur la surface extérieure de ce tube entre les deux capuchons, le manchon venant en butée sur le bord supérieur du premier capuchon monté à la partie inférieure du tube et servant d'appui par son bord opposé au second capuchon, à la partie supérieure du tube.

Selon une autre caractéristique, les moyens électriques de détection du niveau d'eau lorsque chaque tube est rempli, sont logés dans le second capuchon à la partie supérieure du tube et sont constitués par deux électrodes identiques, montées en bout de deux câbles de liaison avec l'ensemble de contrôle externe, la mesure s'effectuant par contrôle de la valeur de l'impédance entre ces deux électrodes, la longueur des câbles à l'intérieur du second capuchon correspondant à la hauteur du niveau de remplissage du tube.

Avantageusement, un des deux câbles est relié à la masse et l'autre à l'ensemble de contrôle externe.

De préférence également, les deux câbles sont parallèles, noyés et immobilisés en position dans le second capuchon à la partie supérieure du tube, par un bloc de résine ou d'un matériau durcissable analogue, coulé à l'intérieur de ce capuchon.

Selon encore une autre caractéristique du dispositif considéré, l'ossature de support des tubes comporte un bâti comprenant une base horizontale commune aux différents tubes parallèles à axes verticaux qui s'appuient sur une portée de cette base à leur extrémité inférieure et une entretoise inclinée d'immobilisation de ces tubes selon leur hauteur, respectivement variable d'un tube au suivant.

Avantageusement, la liaison entre les tubes et l'entretoise d'immobilisation s'effectue par l'intermédiaire du second capuchon de chaque tube, monté à la partie supérieure de celui-ci.

Selon une autre caractéristique, l'implantation de l'ossature dans le lit du cours d'eau est réalisée au moyen d'un pied vertical d'ancrage, apte à être enfoncé dans le sol à l'endroit choisi.

Egalement, l'inclinaison de l'entretoise par rapport à la base est réglable autour de pions de liaison transversaux montés dans des emplacements variables prévus dans la base et dans un montant vertical, perpendiculaire à celle-ci, en fonction de la hauteur respective des tubes.

Selon encore une autre caractéristique, l'ensemble de contrôle comporte un connecteur étanche de liaison avec les câbles reliés aux électrodes de mesure de chaque tube.

Cet ensemble de contrôle comporte avantageusement des moyens d'enregistrement des données relatives, au prélèvement d'eau effectué dans chaque tube, notamment l'heure, l'identification du tube et le niveau atteint.

D'autres caractéristiques d'un dispositif pour le prélèvement d'échantillon dans un cours d'eau conforme à l'invention, apparaîtront encore à travers la description qui suit d'un exemple de réalisation, donné à titre indicatif et non limitatif, en référence aux dessins annexés, sur lesquels :
- Les Figures 1 et 2 sont des vues schématiques, en élévation, de l'ossature de support supportant les tubes de prélèvement du dispositif considéré, selon deux configurations différentes.
- La Figure 3 est une vue, à plus grande échelle, illustrant le détail de la réalisation du dispositif.
- La Figure 4 est une vue en élévation, à encore plus grande échelle, d'un tube de prélèvement et de ses divers accessoires.
- La Figure 5 est une vue de détail, en perspective, du capuchon supérieur, monté sur le tube de la Figure 4.

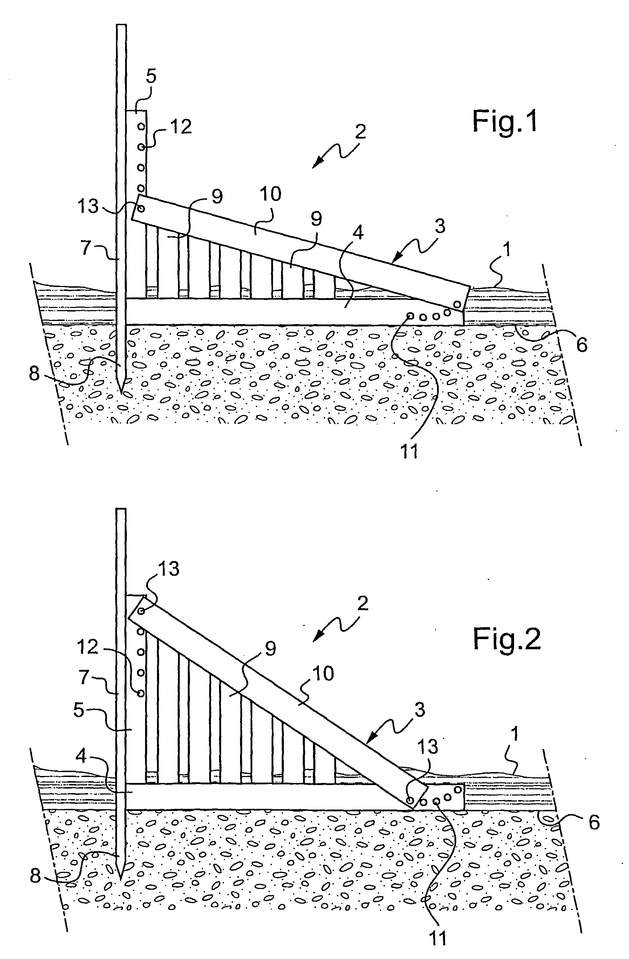

Sur les Figures 1 et 2, on a schématiquement représenté, selon une section partielle, une partie d'un ruisseau ou d'un cours d'eau 1, sur lequel on désire effectuer des mesures en période de crue au moyen de prélèvements d'échantillons d'eau de surface effectués avec un dispositif 2, conforme à l'invention.

Ce dispositif 2 se compose notamment d'une ossature rigide 3, essentiellement constituée d'une base horizontale 4 et d'un montant vertical 5.

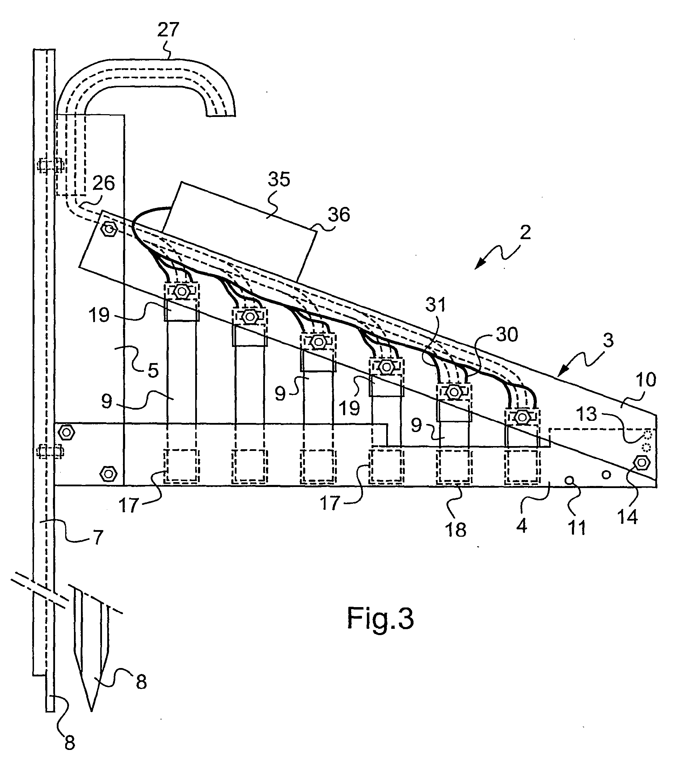

La base 4 est prévue pour s'appliquer contre le sol 6 du lit du cours d'eau 1, le montant vertical 5 comportant un pied d'ancrage vertical 7 qui peut être enfoncé de façon suffisamment profonde dans le sol 6 pour immobiliser convenablement l'ossature. Avantageusement, le pied d'ancrage 7 comporte à son extrémité inférieure une pointe effilée 8 (voir la Figure 3 qui illustre également celle-ci, en vue rabattue), permettant une bonne pénétration du pied dans le sol et par suite un maintien satisfaisant de l'ossature 3 sans que l'écoulement du cours d'eau 1 puisse provoquer une modification dans le positionnement du dispositif de prélèvement qui fausserait les mesures effectuées.

L'ossature 3 sert de support à une pluralité de tubes de prélèvement parallèles 9, à axes verticaux, de préférence régulièrement espacés, destinés à collecter chacun un échantillon d'eau à la surface du cours d'eau 1 au fur et à mesure que le niveau dans celui-ci augmente en période de crue, chaque tube 9 présentant une hauteur différente d'un tube au suivant, ces tubes étant répartis selon la longueur de la base 4 sur une portée de laquelle ces tubes reposent par leur partie inférieure.

Les tubes de prélèvement 9 sont maintenus en place par une entretoise 10 qui assure leur immobilisation vis-à-vis de l'ossature, cette entretoise pouvant prendre une inclinaison appropriée qui varie en fonction des dimensions en hauteur respectives des divers tubes, grâce à des perçages convenablement répartis, tels que 11, 12 et 13, prévus sur la base 4, le montant vertical 5 et l'entretoise 10, et propres à coopérer avec des pions transversaux munis d'écrous de blocage 14 (Figure 3).

Bien entendu, d'autres solutions mécaniques équivalentes pour faire varier d'un mode d'utilisation à un autre l'inclinaison de l'entretoise 10 dans l'ossature 3 et pour assurer l'immobilisation des tubes 9 sur celle-ci, pourraient être envisagées sans sortir du cadre de l'invention.

Les Figures 3 à 5 illustrent avec plus de détails la structure particulière des différents tubes de prélèvement 9 et de l'ossature 3 qui les supporte.

Chaque tube 9, cylindrique, ouvert à ses deux extrémités, respectivement 15 et 16, est réalisé au moyen d'un matériau approprié, de préférence en une matière plastique transparente, notamment du genre PVC ou similaire.

A sa partie inférieure, chaque tube 9 est fermé par un premier capuchon 17, étanche, également en PVC, et qui présente un fond plat 18 permettant d'appliquer étroitement le tube contre la portée plane prévue à cet effet sur la base 4 de l'ossature.

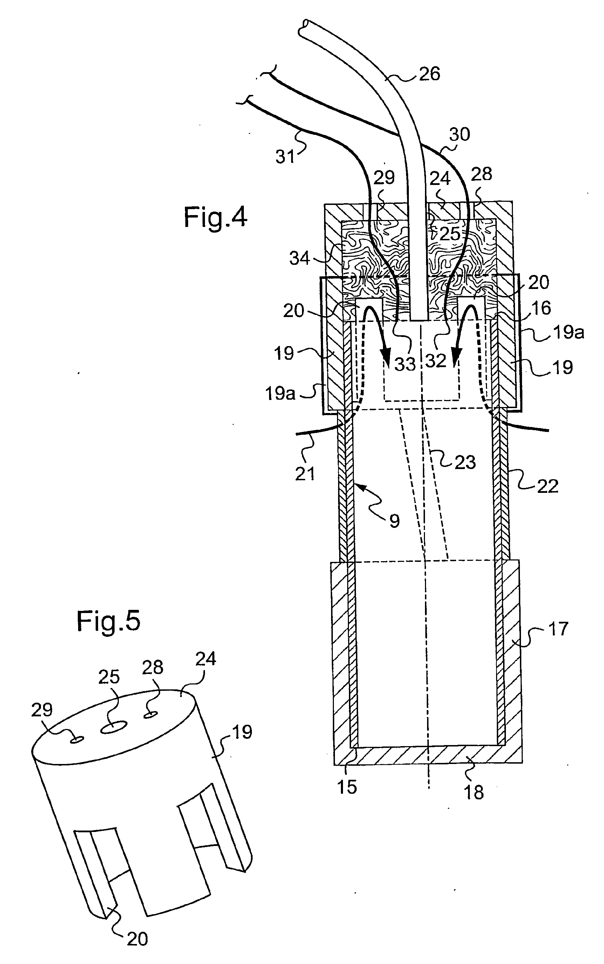

A sa partie supérieure, le même tube 9 est muni d'un second capuchon 19, également étanche, opposé au premier capuchon 17 et qui coiffe ainsi l'extrémité haute du tube, ce second capuchon comportant des fentes latérales 20 (Figure 5), de préférence au nombre de quatre dans l'exemple plus spécialement considéré, deux à deux diamétralement opposées, ces fentes permettant à l'eau qui s'écoule notamment à la surface du cours d'eau 1, de pénétrer progressivement et sans turbulences dans ce tube, selon un trajet en chicane schématisé par la flèche 21 (Figure 4) à l'intérieur du tube 9, en en assurant le remplissage au fur et à mesure que le niveau du cours d'eau augmente.

Avantageusement, le capuchon supérieur 19 comporte extérieurement un élément de recouvrement tubulaire 19a, élastique, propre à minimiser les échanges entre l'eau extérieure dans le cours d'eau 1 et l'échantillon prélevé dans le tube 9 après remplissage de celui-ci à travers les fentes 20.

L'espace qui sépare les deux capuchons 17 et 19 sur la surface extérieure du tube 9 est par ailleurs délimité par un manchon externe 22 formant cale de positionnement, assurant la butée des deux capuchons sur ses extrémités, ce manchon 22 ayant notamment pour but de permettre un écartement de ces capuchons toujours égal à lui-même pour une bonne reproductibilité des mesures de détection du niveau d'eau dans le tube de la manière explicitée plus loin, notamment à chaque réutilisation du tube pour un nouveau prélèvement.

Le manchon 22 comporte de préférence une encoche traversante 23, inclinée sur la direction verticale, qui permet de faciliter le glissement de ce manchon sur la surface externe du tube 9 lors de sa mise en place.

Dans son fond 24, qui délimite sa partie supérieure au-dessus de l'extrémité du tube 9 coiffé par le capuchon 19, ce dernier comporte un perçage 25, par lequel peut librement s'engager un élément de tuyauterie 26 dont l'extrémité ouverte se situe au-dessus du tube, cet élément permettant la mise à l'air à la pression atmosphérique extérieure, de l'intérieur du tube, de manière à permettre son libre remplissage par l'eau à travers les fentes 20.

Des perçages complémentaires (non représentés) sont prévus latéralement dans le capuchon 19 pour permettre sa fixation sur l'entretoise 10 de l'ossature 3.

Les divers éléments de tuyauterie 26 mettant ainsi à l'air l'intérieur des différents tubes 9 portés par l'ossature 3, sont raccordés à un fourreau de maintien 27, commun à ces éléments, immobilisé contre le montant vertical 5 au-dessus de l'entretoise 10.

Chaque capuchon supérieur 19 d'un tube 9 quelconque comporte également, dans son fond 24, de part et d'autre du perçage central 25, deux trous, respectivement 28 et 29, pour le passage de deux câbles électriques 30 et 31 qui pénètrent à l'intérieur du capuchon au-dessus du tube 9, la longueur de ces câbles à l'intérieur du second capuchon 19 correspondant à la hauteur du niveau de remplissage du tube 9.

Ces câbles 30 et 31 sont munis à leurs extrémités inférieures dans le capuchon d'électrodes, respectivement 32 et 33, .disposées au même niveau horizontal sensiblement à la partie supérieure du tube 9, ces électrodes et ces câbles étant immobilisés dans le capuchon 19 par un bloc de résine ou matériau similaire 34, coulé et durci à l'intérieur de ce capuchon.

Les divers câbles 30 et 31 issus des différents tubes 9 de prélèvement positionnés sur l'ossature 3, sont réunis à un connecteur commun 35, monté dans un boîtier étanche 36, avantageusement fixé sur le dessus de l'entretoise inclinée 10.

L'équipement de l'appareil comporte enfin un ensemble de contrôle externe (non représenté), comprenant des moyens électroniques adaptés pour mesurer séquentiellement l'instant du remplissage de chacun des tubes et le niveau respectif atteint par l'eau dans ceux-ci au fur et à mesure de l'accroissement de la hauteur du cours d'eau 1. De préférence, un des deux câbles 30 est relié à la masse et l'autre 31 à l'ensemble de contrôle externe.

Les électrodes 32 et 33 immobilisés dans le capuchon 19 par le bloc de résine 34 forment les moyens de détection électrique du niveau d'eau, notamment en jouant le rôle des deux électrodes d'un condensateur dont le diélectrique est constitué par de l'air présentant une forte impédance aussi longtemps que l'eau n'atteint pas ces électrodes à l'intérieur du tube intéressé, et par l'eau elle-même, avec une faible impédance, lorsque le niveau de ces électrodes est atteint par celle-ci, à la fin du remplissage du tube à travers les fentes d'admission 20 du capuchon supérieur 19.

L'ensemble de contrôle permet de détecter et d'enregistrer cette variation d'impédance et par suite de mesurer avec la précision voulue l'instant et le niveau de remplissage d'un tube au suivant sur l'ossature.

Par ailleurs, une fois les mesures achevées sur les divers tubes au fur et à mesure de l'accroissement, en période de crue, du niveau d'eau dans le cours d'eau, chaque tube peut être aisément désolidarisé et extrait de l'ossature pour permettre une mesure distincte de la quantité et de la nature des matières en suspension dans ce tube, c'est-à-dire sur l'eau prélevée à la surface du cours d'eau.

On réalise ainsi un dispositif d'échantillonnage autonome, simple et peu coûteux, permettant une excellente reproductibilité des mesures effectuées, les prélèvements réalisés en un point précis du cours d'eau assurant des mesures parfaitement représentatives de la dynamique de celui-ci et de son comportement en période de crue.

Bien entendu, il va de soi que l'invention ne se limite pas à l'exemple de réalisation plus spécialement décrit et représenté, en référence aux dessins annexés. Notamment, cet exemple envisage l'utilisation de six tubes parallèles, verticaux, de hauteur régulièrement variable de l'un à l'autre. Il est clair que ce nombre n'est pas limitatif, non plus que la hauteur relative des tubes et leur écartement respectif sur l'ossature.

L'ensemble de contrôle extérieur, dont les caractéristiques sont en principe classiques et n'importent pas à l'invention, peut être réalisé sous n'importe quelle forme propre à assurer la mise en oeuvre des protocoles adaptés aux mesures à effectuer dans chaque cas particulier, ces mesures pouvant être aisément traitées par un programme informatique adapté pour caractériser le cours d'eau, notamment ses variations de hauteur, de charges solides en suspension et de charges dissoutes.

## Revendications

1. Dispositif pour le prélèvement d'échantillons en surface dans un cours d'eau (1) en période de crue, porté par une ossature de support (3) apte à être implantée dans le lit du cours d'eau à traiter, **caractérisé en ce qu'**il comporte, d'une part un ensemble de tubes parallèles (9), à axes verticaux, régulièrement espacés et propres à collecter chacun un échantillon d'eau en surface, chaque tube présentant une hauteur différente d'un tube au suivant sur l'ossature, étant obturé à sa partie inférieure et comportant à sa partie supérieure des fentes d'admission (20) de l'échantillon d'eau de surface dans le tube lorsque le niveau du cours d'eau atteint ces fentes, d'autre part des moyens électriques (32,33) de détection du niveau d'eau lorsque le tube (9) est rempli, et enfin un ensemble commun de contrôle, séparé de l'ossature, relié à l'ensemble des tubes pour mesurer séquentiellement l'instant de leur remplissage respectif au fur et à mesure de l'accroissement du niveau dans le cours d'eau.

2. Dispositif selon la revendication 1, **caractérisé en ce que** chaque tube (9) est cylindrique, est obturé à sa partie inférieure par un premier capuchon de fermeture (17) coiffant l'extrémité du tube, et est muni à sa partie supérieure d'un second capuchon (19) comportant les fentes d'admission (20) de l'eau de surface dans le tube.

3. Dispositif selon la revendication 2, **caractérisé en ce que** le second capuchon (19), monté à l'extrémité supérieure de chaque tube (9), comporte quatre fentes (20), deux à deux opposées.

4. Dispositif selon l'une des revendications 2 ou 3, **caractérisé en ce que** le second capuchon (19) comporte un élément de tuyauterie (26) qui traverse son fond supérieur (24) pour mise à l'air à la pression atmosphérique de l'intérieur du tube afin de permettre son remplissage régulier par l'eau de surface à travers les fentes d'admission (20).

5. Dispositif selon l'une quelconque des revendications 2 à 4, **caractérisé en ce que** le second capuchon (19) comporte extérieurement un élément de recouvrement tubulaire (19a), élastique, propre à minimiser les échanges entre l'eau extérieure dans le cours d'eau (1) et l'échantillon prélevé dans le tube (9) après remplissage de celui-ci à travers les fentes (20).

6. Dispositif selon l'une quelconque des revendications 2 à 5, **caractérisé en ce qu'**un manchon cylindrique (22) est disposé autour de chaque tube (9) entre ses deux capuchons (17,19) pour permettre un positionnement toujours identique à lui-même de ces derniers sur le tube.

7. Dispositif selon la revendication 6, **caractérisé en ce que** le manchon cylindrique (22) est agencé pour définir avec les fentes d'admission (20) de l'eau dans le tube (9) un trajet en chicane, propre à éviter un remplissage turbulent du tube.

8. Dispositif selon l'une des revendications 6 ou 7, **caractérisé en ce que** le manchon cylindrique (22) est réalisé en un matériau souple et est muni d'une encoche traversante (23) inclinée sur l'axe du tube (9), apte à assurer son positionnement par glissement sur la surface extérieure de ce tube entre les deux capuchons (17,19), le manchon venant en butée sur le bord supérieur du premier capuchon monté à la partie inférieure du tube et servant d'appui par son bord opposé pour le second capuchon, à la partie supérieure du tube.

9. Dispositif selon l'une quelconque des revendications 2 à 8, **caractérisé en ce que** les moyens électriques (32,33) de détection du niveau d'eau lorsque chaque tube (9) est rempli, sont logés dans le second capuchon (19) à la partie supérieure du tube et sont constitués par deux électrodes identiques, montées en bout de deux câbles de liaison (30,31) avec l'ensemble de contrôle externe, la mesure s'effectuant par contrôle de la valeur de l'impédance entre ces deux électrodes, la longueur des câbles à l'intérieur du second capuchon correspondant à la hauteur du niveau de remplissage du tube.

10. Dispositif selon la revendication 9, **caractérisé en ce qu'**un des deux câbles (31) est relié à la masse et l'autre (30) à l'ensemble de contrôle externe.

11. Dispositif selon l'une des revendications 9 ou 10, **caractérisé en ce que** les deux câbles (30,31) sont parallèles et noyés et immobilisés en position dans le second capuchon (19) à la partie supérieure du tube (9), par un bloc (34) de résine ou d'un matériau durcissable analogue, coulé à l'intérieur de ce capuchon.

12. Dispositif selon l'une quelconque des revendications 1 à 11, **caractérisé en ce que** l'ossature de support (3) des tubes (9) comporte un bâti comprenant une base horizontale (4) commune aux différents tubes (9) parallèles, à axes verticaux qui s'appuient sur cette base à leur extrémité inférieure et une entretoise inclinée (10) d'immobilisation de ces tubes selon leur hauteur, respectivement variable d'un tube au suivant.

13. Dispositif selon les revendications 2 et 12, **caractérisé en ce que** la liaison entre les tubes (9) et l'entretoise d'immobilisation (10) s'effectue par l'intermédiaire du second capuchon (19) de chaque tube, monté à la partie supérieure de celui-ci.

14. Dispositif selon l'une quelconque des revendications 1 à 13, **caractérisé en ce que** l'implantation de l'ossature (3) dans le lit du cours d'eau (1) est réalisée au moyen d'un pied vertical d'ancrage (7), apte à être enfoncé dans le sol (6) à l'endroit choisi.

15. Dispositif selon l'une quelconque des revendications 12 à 14, **caractérisé en ce que** l'inclinaison de l'entretoise (10) par rapport à la base (4) est réglable autour de pions de liaison transversaux (14) montés dans des emplacements variables prévus dans la base et dans un montant vertical (5), perpendiculaire à celle-ci, en fonction de la hauteur respective des tubes (9).

16. Dispositif selon l'une quelconque des revendications 9 à 15, **caractérisé en ce que** l'ensemble de contrôle comporte un connecteur étanche (35) de liaison avec les câbles (30,31) reliés aux électrodes de mesure (32,33) de chaque tube (9).

17. Dispositif selon l'une quelconque des revendications 1 à 16, **caractérisé en ce que** l'ensemble de contrôle comporte des moyens d'enregistrement des données relatives au prélèvement d'eau effectué dans chaque tube (9), notamment l'heure, l'identification du tube et le niveau atteint.

## Claims

1. Device for taking samples from the surface of a watercourse (1) during a flood period, carried by a support frame (3) suitable for siting in the bed of the watercourse to be treated, **characterized in that** it comprises, firstly a set of parallel tubes (9), with vertical axes, regularly spaced and each suited to collecting a sample of water at the surface, each tube having a height which differs from one tube to the next on the frame, being sealed at its bottom and comprising at its top slots (20) for the admission of the sample of surface water into the tube when the level of the watercourse reaches these slots, secondly electrical means (32, 33) for detecting the water level when the tube (9) is filled, and finally a common control unit, separate from the frame, connected to the set of the tubes for sequentially measuring the time of their respective filling as the level in the watercourse rises.

2. Device according to claim 1, **characterized in that** each tube (9) is cylindrical, sealed at its bottom by a first closure cap (17) capping the end of the tube, and is provided at its top with a second cap (19) comprising the slots (20) for admitting the surface water into the tube.

3. Device according to claim 2, **characterized in that** the second cap (19), mounted on the top end of each tube (9), comprises four slots (20), two opposite two.

4. Device according to one of claims 2 or 3, **characterized in that** the second cap (19) comprises a tubing element (26) which passes through its upper base (24) for venting the inside of the tube to atmospheric pressure in order to allow its regular filling by the surface water through the admission slots (20).

5. Device according to any one of claims 2 to 4, **characterized in that** the second cap (19) comprises externally a tubular, elastic, covering element (19a), suited to minimizing the exchanges between the surface water outside in the watercourse (1) and the sample taken into the tube (9) after the filling of the latter through the slots (20).

6. Device according to any one of claims 2 to 5, **characterized in that** a cylindrical sleeve (22) is arranged around each tube (9) between its two caps (17, 19) in order to allow a positioning always identical to itself of said caps on the tube.

7. Device according to claim 6, **characterized in that** the cylindrical sleeve (22) is ' arranged in order to define, with the slots (20) for the admitting the water into the tube (9), a baffle path suited to avoiding a turbulent filling of the tube.

8. Device according to one of claims 6 or 7, **characterized in that** the cylindrical sleeve (22) is made of a flexible material and provided with a through slot (23), inclined to the axis of the tube (9), suitable for ensuring its positioning by sliding over the outer surface of this tube between the two caps (17, 19), the sleeve abutting against the top edge of the first cap mounted on the bottom of the tube and serving as a support via its opposite edge for the second cap, on the top of the tube.

9. Device according to any one of claims 2 to 8, **characterized in that** the electrical means (32, 33) for detecting the water level when each tube (9) is filled, are housed in the second cap (19) on the top of the tube and are constituted by two identical electrodes, mounted at the end of two cables (30, 31) which connect to the external control unit, the measurement being carried out by checking the impedance value between these two electrodes, the length of the cables inside the second cap corresponding to the height of the filling level of the tube.

10. Device according to claim 9, **characterized in that** one of the two cables (31) is connected to earth and the other (30) to the external control unit.

11. Device according to one of claims 9 or 10, **characterized in that** the two cables (30, 31) are parallel, submerged and fixed in position in the second cap (19) on the top of the tube (9) by a block (34) of resin or of a similar hardenable material, poured inside this cap.

12. Device according to any one of claims 1 to 11, **characterized in that** the support frame (3) of the tubes (9) comprises a structure comprising a horizontal base (4) common to the different parallel tubes (9) with vertical axes which are supported on this base at their bottom end and an inclined strut (10) for fixing these tubes according to their height, respectively variable from one tube to the next.

13. Device according to claims 2 and 12, **characterized in that** the connection between the tubes (9) and the fixing strut (10) is made by means of the second cap (19) of each tube, mounted on the top of the latter.

14. Device according to any one of claims 1 to 13, **characterized in that** the siting of the frame (3) in the bed of the watercourse (1) is carried out by means of a vertical anchoring foot (7) which can be driven into the soil (6) at the chosen location.

15. Device according to any one of claims 12 to 14, **characterized in that** the inclination of the strut (10) with respect to the base (4) can be adjusted about transversal connection pins (14) mounted in variable locations provided in the base and in a vertical post (5), perpendicular to the latter, depending on the respective height of the tubes (9).

16. Device according to any one of claims 9 to 15, **characterized in that** the control unit comprises a watertight connector (35) linking to the cables (30, 31) connected to the measurement electrodes (32, 33) of each tube (9).

17. Device according to any one of claims 1 to 16, **characterized in that** the control unit comprises means for recording the data relating to the water sampling carried out in each tube (9), in particular the time, the identification of the tube and the level reached.

## Patentansprüche

1. Vorrichtung zur Entnahme von Proben an der Oberfläche eines Wasserlaufes (1) zu Zeiten von Hochwasser, die von einem Traggestell (3) getragen wird, das in das Bett des Wasserlaufes gestellt werden kann, **dadurch gekennzeichnet, dass** sie einerseits eine Gesamtheit von parallelen Rohren (9) mit vertikalen Achsen umfasst, die in regelmäßigen Abständen angeordnet sind und jeweils eine Wasserprobe an der Oberfläche aufnehmen können, wobei jedes Rohr eine unterschiedliche Höhe von einem Rohr zum nächsten auf dem Gestell aufweist, an seinem unteren Teil verschlossen ist und an seinem oberen Teil Einlassschlitze (20) für die Oberflächenwasserprobe in das Rohr, wenn das Niveau des Wasserlaufes diese Schlitze erreicht, aufweist, und andererseits elektrische Mittel (32, 33) zur Erfassung des Wasserniveaus, wenn das Rohr (9) gefüllt ist, und schließlich eine gemeinsame Steuereinheit, die von dem Gestell getrennt und mit der Gesamtheit der Rohre verbunden ist, umfasst, um sequentiell den Moment ihrer jeweiligen Befüllung im Zuge des Niveauanstiegs im Wasserlauf zu messen.

2. Vorrichtung nach Anspruch 1, **dadurch gekennzeichnet, dass** jedes Rohr (9) zylindrisch, an seinem unteren Teil durch einen ersten Verschlussstöpsel (17), der sich an das Ende des Rohrs anpasst, verschlossen und an seinem oberen Teil mit einem zweiten Stöpsel (19) versehen ist, der die Einlassschlitze (20) für das Oberflächenwasser in das Rohr umfasst.

3. Vorrichtung nach Anspruch 2, **dadurch gekennzeichnet, dass** der zweite Stöpsel (19), der am oberen Ende jedes Rohrs (9) montiert ist, vier Schlitze (20) umfasst, die einander zwei und zwei gegenüber liegen.

4. Vorrichtung nach einem der Ansprüche 2 oder 3, **dadurch gekennzeichnet, dass** der zweite Stöpsel (19) ein Rohrelement (26) umfasst, das seinen oberen Boden (24) quert, um das Innere des Rohrs bei Luftdruck zu entlüften, um seine regelmäßige Befüllung mit dem Oberflächenwasser durch die Einlassschlitze (20) zu ermöglichen.

5. Vorrichtung nach einem der Ansprüche 2 bis 4, **dadurch gekennzeichnet, dass** der zweite Stöpsel (19) außen ein elastisches röhrenförmiges Abdeckelement (19a) umfasst, das den Austausch zwischen dem Außenwasser im Wasserlauf (1) und der entnommenen Probe im Rohr (9) nach Befüllung desselben durch die Schlitze (20) minimieren kann.

6. Vorrichtung nach einem der Ansprüche 2 bis 5, **dadurch gekennzeichnet, dass** eine zylindrische Hülle (22) um jedes Rohr (9) zwischen seinen beiden Stöpseln (17, 19) angeordnet ist, um eine immer zu diesem selbst identische Positionierung dieser letztgenannten auf dem Rohr zu ermöglichen.

7. Vorrichtung nach Anspruch 6, **dadurch gekennzeichnet, dass** die zylindrische Hülle (22) derart angeordnet ist, dass sie mit den Einlassschlitzen (20) für das Wasser in das Rohr (9) eine Bahn mit Hindernissen definiert, die eine wirbelnde Befüllung des Rohrs verhindern kann.

8. Vorrichtung nach einem der Ansprüche 6 oder 7, **dadurch gekennzeichnet, dass** die zylindrische Hülle (22) aus einem biegsamen Material hergestellt und mit einer durchgehenden Kerbe (23) versehen ist, die auf die Achse des Rohrs (9) geneigt ist und seine Positionierung durch Gleiten auf der Außenfläche dieses Rohrs zwischen den beiden Stöpseln (17, 19) sicherstellen kann, wobei die Hülle am oberen Rand des ersten Stöpsels, der am unteren Teil des Rohrs montiert ist und mit seinem gegenüber liegenden Rand als Stütze für den zweiten Stöpsel am oberen Teil des Rohrs dient, anschlägt.

9. Vorrichtung nach einem der Ansprüche 2 bis 8, **dadurch gekennzeichnet, dass** die elektrischen Mittel (32, 33) zur Erfassung des Wasserniveaus, wenn jedes Rohrs (9) befüllt ist, in dem zweiten Stöpsel (19) am oberen Rand des Rohrs angeordnet und von zwei identischen Elektroden gebildet sind, die am Ende von zwei Verbindungskabeln (30, 31) mit der äußeren Steuereinheit montiert sind, wobei die Messung durch Kontrolle des Impedanzwertes zwischen diesen beiden Elektroden erfolgt, wobei die Länge der Kabel im Inneren des zweiten Stöpsels der Höhe des Füllstandes des Rohrs entspricht.

10. Vorrichtung nach Anspruch 9, **dadurch gekennzeichnet, dass** eines der beiden Kabel (31) mit der Masse und das andere (30) mit der äußeren Steuereinheit verbunden ist.

11. Vorrichtung nach einem der Ansprüche 9 oder 10, **dadurch gekennzeichnet, dass** die beiden Kabel (30, 31) parallel und versenkt und in dem zweiten Stöpsel (19) am oberen Teil des Rohrs (9) durch einen Block (34) aus Harz oder einem ähnlichen härtbaren Material, das in das Innere dieses Stöpsels gegossen wird, festgestellt sind.

12. Vorrichtung nach einem der Ansprüche 1 bis 11, **dadurch gekennzeichnet, dass** das Stützgestell (3) der Rohre (9) ein Gehäuse besitzt, umfassend eine horizontale Grundfläche (4), die den verschiedenen parallelen Rohren (9) mit vertikalen Achsen, die sich auf diese Grundfläche mit ihrem unteren Ende aufstützen, gemeinsam ist, und eine geneigte Querstrebe (10) zur Feststellung dieser Rohre entlang ihrer Höhe, die von einem Rohr zum nächsten jeweils variiert.

13. Vorrichtung nach den Ansprüchen 2 und 12, **dadurch gekennzeichnet, dass** die Verbindung zwischen den Rohren (9) und der Querstrebe (10) zur Feststellung mit Hilfe des zweiten Stöpsels (19) jedes Rohrs, der am oberen Teil desselben montiert ist, erfolgt.

14. Vorrichtung nach einem der Ansprüche 1 bis 13, **dadurch gekennzeichnet, dass** die Anbringung des Gestells (3) im Bett des Wasserlaufes (1) mit Hilfe eines vertikalen Verankerungsfußes (7) erfolgt, der an der ausgewählten Stelle im Boden (6) versenkt werden kann.

15. Vorrichtung nach einem der Ansprüche 12 bis 14, **dadurch gekennzeichnet, dass** die Neigung der Querstrebe (10) in Bezug zur Grundfläche (4) um Querverbindungsstifte (14) einstellbar ist, die an variablen Stellen, die in der Grundfläche und in einem vertikalen Ständer (5), der zu dieser senkrecht ist, in Abhängigkeit von der jeweiligen Höhe der Rohre (9) montiert sind.

16. Vorrichtung nach einem der Ansprüche 9 bis 15, **dadurch gekennzeichnet, dass** die Steuereinheit einen dichten Verbindungsstecker (35) mit den Kabeln (30, 31) umfasst, die an die Messelektroden (32, 33) jedes Rohrs (9) angeschlossen sind.

17. Vorrichtung nach einem der Ansprüche 1 bis 16, **dadurch gekennzeichnet, dass** die Steuereinheit Mittel zur Aufzeichnung der Daten zu der in jedem Rohr (9) vorgenommenen Wasserentnahme, insbesondere Uhrzeit, Identifikation des Rohrs und erreichter Füllstand, umfasst.
